# EUROPÄISCHE PATENTANMELDUNG

(11) **EP 2 065 565 A2**
(43) Veröffentlichungstag der Anmeldung: **03.06.2009**
(21) Anmeldenummer: 08020840.8
(22) Anmeldetag: 01.12.2008
(51) Int. Cl.: F01D 11/00

(54) **Verfahren zur Reparatur eines Dichtsegments einer Gasturbine**

(30) Priorität: 01.12.2007 DE 102007057930
(71) Anmelder: MTU Aero Engines GmbH, 80995 München (DE)
(72) Erfinder: Lange, Anja, 30855 Langenhagen (DE)

(57) **Zusammenfassung**

Verfahren zur Reparatur eines Dichtsegments einer Gasturbine, wobei das Dichtsegment einen radial außenliegenden Tragbereich für einen radial innenliegenden Einlaufbereich umfasst. Das erfindungsgemäße Verfahren umfasst zumindest die folgenden Schritte: a) Bereitstellen eines zu reparierenden Dichtsegments; b) Abtragen des beschädigten, radial innenliegenden Einlaufbereichs des Dichtsegments entlang einer sich in Umfangsrichtung erstreckenden Trennebene, derart, dass der Einlaufbereich vollständig vom Tragbereich entfernt wird; c) Herstellen eines Ersatzteils für den abgetrennten Einlaufbereich des Dichtsegments; d) Fügen des Ersatzteils an den Tragbereich des Dichtsegments.

## Beschreibung

Die Erfindung betrifft ein Verfahren zur Reparatur eines Dichtsegments einer Gasturbine.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. Bei der Entwicklung von Gasturbinen spielt die Werkstoffauswahl, die Suche nach neuen, geeigneten Werkstoffen sowie die Suche nach neuen Fertigungsverfahren und Reparaturverfahren eine entscheidende Rolle.

Zur Leistungssteigerung ist es von Bedeutung alle Komponenten und Subsysteme zu optimieren. Hierzu zählen auch die sogenannten Dichtsysteme. Besonders problematisch ist bei Flugtriebwerken die Einhaltung eines minimalen Spalts zwischen den rotierenden Laufschaufeln und dem feststehenden Gehäuse einer Hochdruckturbine. Bei Hochdruckturbinen treten nämlich größte Temperaturen sowie Temperaturgradienten auf, was die Spalthaltung erschwert.

Die Enden bzw. Spitzen der rotierenden Laufschaufeln sind beim sogenannten Anstreifen an die Dichtsegmente des feststehenden Gehäuses einem direkten Reibkontakt ausgesetzt. Ein solches Anstreifen der Schaufelspitzen wird bei Einstellung eines minimalen Radialspalts durch Fertigungstoleranzen hervorgerufen. Da durch den Reibkontakt der Schaufelspitzen an den Schaufelspitzen und an den Dichtelementen Material abgetragen wird, kann sich über den gesamten Umfang von Gehäuse und Rotor eine unerwünschte Spaltvergrößerung einstellen.

Die Dichtsegmente unterliegen folglich einem Verschleiß. Zusätzlich treten weitere Schadensmechanismen auf, wie thermomechanische Ermüdung und lokale Überhitzung, die zu Rissbildungen und Verbrennungen fuhren. Bei Wartungsarbeitung müssen die Dichtsegmente daher entweder ausgetauscht oder repariert werden

Mit den aus der Praxis bekannten Reparaturverfahren können an Dichtsegmenten bzw. Shrouds nur bestimmte, lokal begrenzte Schadensfälle repariert werden. Dann, wenn an einem Dichtsegment bzw. einem Shroud ein großer bzw. drastischer Schadensfall vorliegt, können dieselben nicht repariert werden, vielmehr müssen dieselben vollständig ersetzt bzw. ausgetauscht werden. Es besteht daher ein Bedarf an einem Reparaturverfahren für ein Dichtsegment, mit welchem ein Dichtsegment auch dann repariert werden kann, wenn dasselbe eine große Beschädigung aufweist.

Hiervon ausgehend liegt der vorliegenden Erfindung das Problem zu Grunde, ein neuartiges Verfahren zur Reparatur eines Dichtsegments einer Gasturbine zu schaffen. Dieses Problem wird durch ein Verfahren zur Reparatur eines Dichtsegments einer Gasturbine gemäß Anspruch 1 gelöst. Das erfindungsgemäße Verfahren umfasst zumindest die folgenden Schritte: a) Bereitstellen eines zu reparierenden Dichtsegments; b) Abtragen des beschädigten, radial innenliegenden Einlaufbereichs des Dichtsegments entlang einer sich in Umfangsrichtung erstreckenden Trennebene, derart, dass der Einlaufbereich vollständig vom Tragbereich entfernt wird; c) Herstellen eines Ersatzteils für den abgetrennten Einlaufbereich des Dichtsegments; d) Fügen des Ersatzteils an den Tragbereich des Dichtsegments.

Bei dem erfindungsgemäßen Reparaturverfahren wird vorgeschlagen, einen innenliegenden Einlaufbereich eines zu reparierenden Dichtsegments vollständig vom Tragbereich des Dichtsegments zu entfernen und ein Ersatzteil für den abgetrennten Einlaufbereich an den verbleibenden Tragbereich zu fügen. Mit dem erfindungsgemäßen Reparaturverfahren können Dichtsegmente auch dann repariert werden, wenn dieselben stark beschädigt sind.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

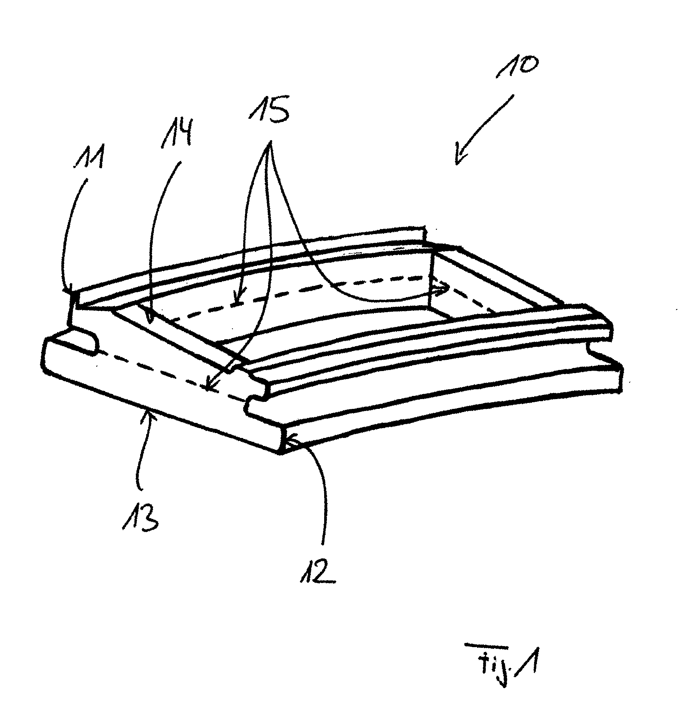

- Fig. 1: eine schematisierte, perspektivische Ansicht eines Dichtsegments.

Nachfolgend wird die hier vorliegende Erfindung unter Bezugnahme auf Fig. 1 in größerem Detail beschrieben.

Die hier vorliegende Erfindung betrifft ein Verfahren zur Reparatur bzw. Instandsetzung von gehäuseseitigen Dichtsegmenten einer Gasturbine.

Fig. 1 zeigt eine schematisierte, perspektivische Ansicht eines Dichtsegments 10 einer Gasturbine, wobei das Dichtsegment 10 einen radial außenliegenden, rahmenartigen Tragbereich 11 für einen radial innenliegenden Einlaufbereich 12 umfasst. Ober den Tragbereich 11 kann ein Dichtsegment 10 an einem statorseitigen Gehäuse der Gasturbine befestigt werden.

Der radial innenliegende Einlaufbereich 12 bildet einen Einlaufbelag für Schaufelspitzen rotierender Laufschaufeln. Im Bereich des radial innenliegenden Einlaufbereichs 12 verfügt das Dichtsegment 10 typischerweise über eine durchgehende, geschlossene Oberfläche 13. Radial außen, im Bereich des rahmenartigen Tragbereichs 11 hingegen ist eine Oberfläche 14 des Dichtsegments 10 nicht geschlossen.

Dann, wenn ein solches Dichtsegment 10 beschädigt ist und repariert werden soll, wird nach dem Bereitstellen des zu reparierenden Dichtsegments 10 der radial innenliegende Einlaufbereich 12 des Dichtsegments 10 entlang einer sich in Umfangrichtung erstreckenden Trennebene 15, die in Fig. 1 durch gestrichelte Linien angedeutet ist, vom radial außen liegenden Tragbereich 11 getrennt, und zwar derart, dass der Einlaufbereich 12 vollständig vom Tragbereich 11 entfernt wird.

Anschließend wird ein Ersatzteil für den abgetrennten Einlaufbereich des Dichtsegments bereitgestellt, wobei es sich hierbei vorzugsweise um ein Gussteil handelt.

Darauffolgend wird das Ersatzteil an den Tragbereich des Dichtsegments gefügt, insbesondere durch Löten oder Schweißen.

Dann, wenn ein zu reparierendes Dichtsegment 10 z. B. mit einer Verschleißschutzbeschichtung beschichtet ist, wird nach dem Abtragen des Einlaufbereichs 12 vom Tragbereich 11 der verbleibende Tragbereich 11 entschichtet. Die Wahl eines geeigneten Entschichtungsverfahrens richtet sich nach der zu entfernenden Beschichtung.

Im Wege des Reparaturverfahrens können in das Ersatzteil Kühlluftbohrungen oder Schlitze zur Aufnahme von Dichtungsblechen eingebracht werden, z. B. durch Laserstrahlschneiden oder Erodieren. Gegebenenfalls kann im Anschluss an das Fügen des Ersatzteils an den Tragbereich eine maschinelle Bearbeitung, insbesondere des Fügebereichs, und/oder eine Beschichtung des repartierten Dichtsegments erfolgen.

## Patentansprüche

1. Verfahren zur Reparatur eines Dichtsegments einer Gasturbine, insbesondere eines Flugtriebwerks, wobei das Dichtsegment einen radial außenliegenden Tragbereich für einen radial innenliegenden Einlaufbereich umfasst, mit zumindest folgenden Schritten:
a) Bereitstellen eines zu reparierenden Dichtsegments;
b) Abtragen des beschädigten, radial innenliegenden Einlaufbereichs des Dichtsegments entlang einer sich in Umfangsrichtung erstreckenden Trennebene, derart, dass der Einlaufbereich vollständig vom Tragbereich entfernt wird;
c) Herstellen eines Ersatzteils für den abgetrennten Einlaufbereich des Dichtsegments;
d) Fügen des Ersatzteils an den Tragbereich des Dichtsegments.

2. Verfahren nach Anspruch 1,
**dadurch gekennzeichnet,**
**dass** nach dem Abtragen des beschädigten, radial innenliegenden Einlaufbereichs der radial außenliegende Tragbereich entschichtet wird.

3. Verfahren nach Anspruch 1 oder 2,
**dadurch gekennzeichnet,**
**dass** das Fügen des Ersatzteils an den Tragbereich des Dichtsegments durch Schweißen oder Löten erfolgt.

4. Verfahren nach einem der Ansprüche 1 bis 3,
**dadurch gekennzeichnet,**
**dass** nach dem Fügen das reparierte Dichtsegment beschichtet wird.

5. Verfahren nach einem der Ansprüche 1 bis 3,
**dadurch gekennzeichnet,**
**dass** nach dem Fügen eine maschinelle Bearbeitung erfolgt.
